Europäisches Patentamt

European Patent Office

Office européen des brevets

(19)

(11) Publication number: **0 026 661**
**B1**

(12) **EUROPEAN PATENT SPECIFICATION**

(45) Date of publication of patent specification: **12.02.86**

(21) Application number: **80303423.0**

(22) Date of filing: **29.09.80**

(51) Int. Cl.⁴: **B 03 B 5/00,** D 21 D 5/06,
F 16 J 15/34, B 01 D 33/34

(54) **Liquid treatment apparatus comprising rotatable drum with flexible edge seal.**

(30) Priority: **27.09.79 GB 7933595**

(43) Date of publication of application:
**08.04.81 Bulletin 81/14**

(45) Publication of the grant of the patent:
**12.02.86 Bulletin 86/07**

(84) Designated Contracting States:
**BE DE FR GB IT LU NL**

(56) References cited:
**DE-A-2 834 393**
**FR-A-1 127 951**
**FR-A-1 325 820**
**GB-A-1 056 519**
**US-A-2 231 947**
**US-A-3 016 251**

(73) Proprietor: **Hawker Siddeley Brackett Limited**
**Severalls Lane**
**Colchester Essex CO4 4PD (GB)**

(72) Inventor: **Berger, Otto**
**35 Gordon Road Dovercourt**
**Harwich Essex (GB)**
Inventor: **Woodham, Edward**
**4 Elm Grove**
**Wivenhoe, Nr. Colchester Essex (GB)**
Inventor: **Gill, Bernard Frederick**
**4 Fitzgilbert Road**
**Colchester Essex (GB)**

(74) Representative: **Dowler, Angus Michael et al**
**Abel & Imray Northumberland House 303-306**
**High Holborn**
**London, WC1V 7LH (GB)**

Courier Press, Leamington Spa, England.

## Description

The invention relates to liquid treatment apparatus, and especially to cup screens.

A cup screen comprises a cylindrical drum, rotatably mounted about its horizontally aligned axis. The cylindrical surface of the drum is perforated and serves as a screening medium, liquid to be screened being passed either onto the outside of the drum, or, more usually, into the interior of the drum, and screened liquid passing through the screening surface to the other side of the drum. The drum will, in general, be mounted so that it is never wholly submerged in either contaminated or screened liquid, and is rotated during use so as to raise screened solids on the screening surface above the liquid level, thereby allowing them to be washed off the upper portion of the screening surface before that portion moves down again into the liquid.

The efficiency of screening, especially with a very fine screening mesh, is dependent on the effectiveness of the seal between the rotating drum and the surrounding stationary parts of the apparatus.

Our DE—A—28 34 393 discloses one form of liquid treatment apparatus comprising a hollow cylindrical drum arranged to rotate about its axis and having an opening in at least one end and a rim encircling the opening, a stationary member adjacent to the rim, and sealing means for preventing liquid from flowing into or out of the drum through the gap between the rim and the stationary member, the sealing means comprising an annular resilient seal secured to one of the rim and the stationary member a portion of which seal is in sliding contact with a planar surface that lies in a plane perpendicular to the said axis on the other of the rim and the stationary member round its entire circumference and is urged resiliently against the surface.

The sealing means proposed in our DE—A—28 34 393 is somewhat complicated and expensive to manufacture.

US—A—2 231 947 discloses a self-draining annular seal for the roll neck bearings in a rolling mill.

US—A—3 016 251 discloses a seal for a propellor shaft of a small vessel in which a frusto-conical flange contacts a counter-surface only with its periphery, in order that the flange shall readily separate from the counter-surface under the centrifugal forces produced by the rotation of the shaft.

The problem underlying the invention is to overcome, at least in part, the disadvantages of the seal of our DE—A—28 34 393.

The invention provides liquid treatment apparatus characterised in that the seal consists of an annular resilient member one end portion of which in its unstressed condition is frusto-conical with the free end of that end portion being at one end of the resilient member in a radial direction and a second portion of which resilient member immediately adjoining the said end portion is cylindrical or frusto-conical with a cone angle different from that of the said end portion and extends axially from where it adjoins the said end portion away from the said free end, the resilient member is secured with its said end and second portions coaxial with the said axis, and the said end portion of the resilient member is pressed flat against the planar surface.

The invention has the advantage that it is possible to provide a cup screen with a seal that is simpler and more economical than that disclosed in DE—A—28 34 393 and may be expected to give superior performance and reliability in use.

Two forms of cup screen constructed in accordance with the invention will now be described by way of example with reference to the accompanying drawings, in which:

Fig. 1 is a fragmentary axial section of the first form of screen;

Fig. 2 is a fragmentary axial section of the seal of the first form of screen in its unstressed condition;

Fig. 3 is a fragmentary axial section of the second form of screen; and

Fig. 4 is a fragmentary axial section of the seal of the second form of screen in its unstressed condition.

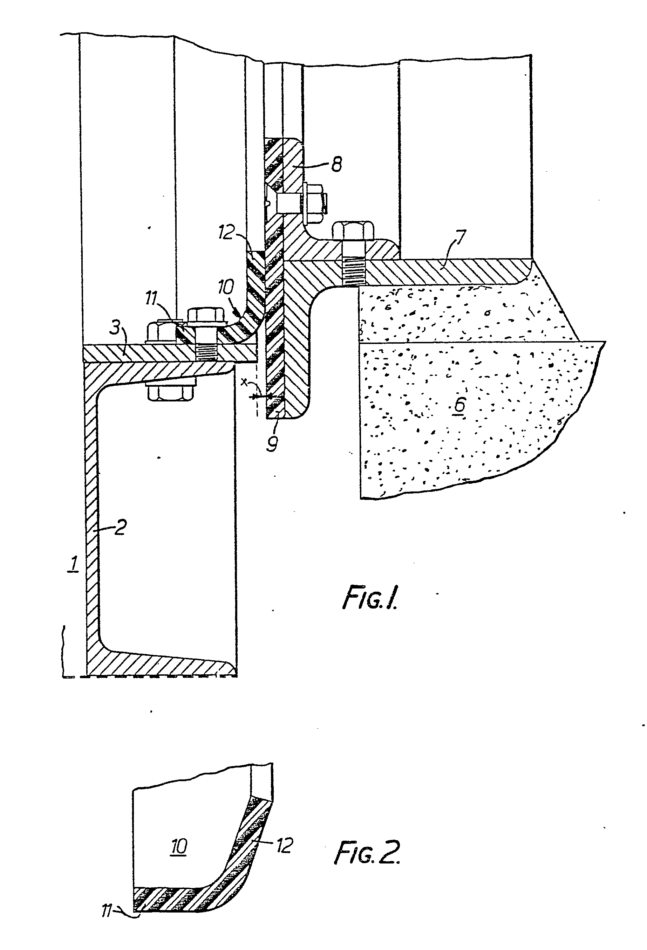

Referring to Fig. 1 of the accompanying drawings, the first form of cup screen comprises a right circular cylindrical drum having a screening surface 1 of perforated or mesh material supported at one end by an annular rail 2 of U-shaped cross-section, the material of the screening surface lying flat against the outer limb of the U. The drum is supported with its axis horizontal and in use is caused to rotate by conventional means (not shown). A cylindrical annular strip 3 is secured to the inside of the inner limb of the U by bolts. The strip 3 projects axially slightly beyond the axial ends of the screening surface 1 and the rail 2.

The wall 6 of the screen chamber is near to the end of the drum, and an angle-ring 7 of L-shaped cross-section is fixed to the wall with one arm of the angle-ring cylindrical and the other planar and extending outwards from the cylindrical arm. The angle-ring 7 is so arranged that the strip 3 is in axial alignment with the planar arm of the angle-ring. A second angle-ring 8 is fixed to the inside of the angle-ring 7, with its planar arm extending radially inwards and the faces of the planar arms of the two angle-rings that are towards the drum being substantially co-planar. A flat annular plate 9 of smooth plastics material is secured to the flat face of the two angle-rings by bolts with countersunk heads, the bolt-heads being countersunk slightly below the surface of the plastics plate and the holes filled and smoothed to give a surface flush with that of the plate. The surface of the plate is separated only by a narrow gap of width X from the projecting axial end of the strip 3.

An annular seal, indicated generally by the reference numeral 10, made of neoprene is bolted to the strip 3. As is shown in Fig. 2 of the accompanying drawings, the seal in its unstressed state comprises a cylindrical portion 11 and a frusto-conical portion 12, tapering to its free end, immediately adjoining the cylindrical portion with a fairly sharp transition between the two. When the screen is assembled for use, as is shown in Fig. 1 of the drawings, the cylindrical portion 11 of the seal 10 is screwed to the inside of the strip 3 with the frusto-conical portion 12 projecting beyond the axial end of the strip and abutting against the plastics plate 9 secured to the wall 6, so as to prevent liquid from flowing into or out of the drum 1 through the gap between the strip 3 and the plate 9. The arrangement is such that the seal 10 is bent out of shape so that the frusto-conical portion 12 is pressed flat against the plate 9. The resilience in the neoprene at the transition between the two portions of the seal 10, which has been bent in the distortion of the seal, and in the frusto-conical portion 12, which has been unevenly compressed, prevents the frusto-conical portion from turning inside-out and presses it against the plate 9.

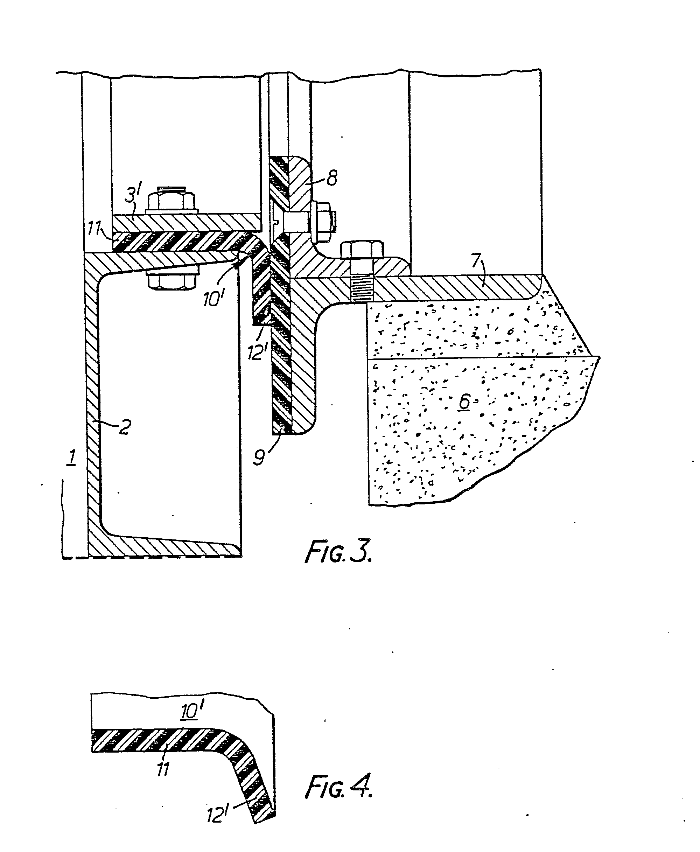

Referring now to Figs. 3 and 4 of the accompanying drawings, the second form of cup screen is similar to the first form except that the annular seal 10' in its unstressed state comprises a cylindrical portion 11 and a frusto-conical portion 12' that spreads outwards to its free end. When the screen is assembled for use, as is shown in Fig. 3 of the accompanying drawings, the cylindrical portion 11 of the seal 10' is clamped between the outside of the cylindrical annular strip 3' and the inner limb of the U-shaped rail 2. As can be seen from the drawings, the radius of the plastics plate 9 is greater, at least when compared with that of the corresponding rail 2, in the second form of screen than in the first. That ensures that the seal 10 does not rub on the filled countersink-holes of the bolts that hold the plate 9 to the angle-ring 8.

It will be appreciated that the seal 10 of the first form of screen will tend to be urged against the plate 9, as is desirable, if the water pressure inside the screen is higher than that outside, which is the case when the screen is used, as is common, with outward flow of water through its screening surface 1, but the seal will tend to be lifted out of contact by a pressure gradient in the opposite direction. The seal 10' of the second form of screen, conversely, will tend to be urged against the sealing plate 9 if the water flows inwards through the screening surface 1.

Because the seal 10 or 10' is generally in the shape of a non-developable surface it is far less likely to ruck than the flat seals that have been used in the past, thus avoiding a very serious cause of leakage.

The friction at the sliding interface between the seal 10 or 10' and the plate 9 is kept low by suitable choice of materials and surface finish, reducing the power consumption of the rotating screen and wear of the seal. The plate 9 being made of a hard plastics material, the wear that does occur is almost entirely to the neoprene seal 10 or 10', and because the seal is mounted on the drum and at the top of its circle is above the liquid level in the screening chamber, the condition of the seal can be easily checked with the screen in use, instead of the screening chamber having to be isolated and drained so that a fixed seal member can be checked, as has often been the case in the past.

## Claims

1. Liquid treatment apparatus comprising a hollow cylindrical drum arranged to rotate about its axis and having an opening in at least one end and a rim (2, 3) encircling the opening, a stationary member (6 to 9) adjacent to the rim, and sealing means for preventing liquid from flowing into or out of the drum through the gap between the rim and the stationary member, the sealing means comprising an annular seal secured to one of the rim and the stationary member a portion of which seal is in sliding contact with a planar surface (9) that lies in a plane perpendicular to the said axis on the other of the rim and the stationary member (6) round its entire circumference and is urged resiliently against the surface, characterised in that the seal consists of an annular resilient member (10) one axial end portion (12) of which in its unstressed condition is frusto-conical and a second portion (11) of which resilient member (10) immediately adjoining the said end portion (12) is cylindrical or frusto-conical with a cone angle different from that of the said end portion (12) and extends axially from where it adjoins the said end portion away from the said free end, the resilient member (10) is secured with its said end and second portions coaxial with the said axis, and the said end portion (12) of the resilient member (10) is pressed flat against the planar surface (9).

2. Apparatus as claimed in claim 1, wherein the seal (10) is secured to the rim (2, 3).

3. Apparatus as claimed in claim 1 or claim 2, wherein the said end portion (12) of the seal (10), when the seal is in its unstressed condition, tapers towards its free end.

4. Apparatus as claimed in claim 1 or claim 2, wherein the said end portion (12) of the seal (10), when the seal is in its unstressed condition, is flared towards its free end.

5. Apparatus as claimed in any one of claims 1 to 4, wherein the said second portion (11) of the seal (10), when the seal is in its unstressed condition, is cylindrical.

6. Apparatus as claimed in any one of claims 1 to 5, wherein the seal (10) is made of neoprene.

7. Apparatus as claimed in any one of claims 1 to 6, wherein the said flat annular surface is faced with, or is the surface of a member (9) of, a material having a low coefficient of friction.

8. Apparatus as claimed in any one of claims 1 to 7, wherein the drum is right circular cylindrical.

9. Apparatus as claimed in any one of claims 1 to 8, wherein the said second portion (11) of the seal (10) is secured somewhere along its axial length to whichever of the rim (2, 3) and the stationary member (6 to 9) the seal is secured.

10. Apparatus as claimed in any one of claims 1 to 9, which is a cup screen.

**Revendications**

1. Appareil de traitement de liquide comprenant un tambour cylindrique creux agencé pour tourner autour de son axe et pourvu d'une ouverture dans au moins une extrémité et d'un rebord (2, 3) entourant l'ouverture, un élément stationnaire (6 à 9) adjacent au rebord, et un moyen d'étanchéité pour empêcher du liquide de pénétrer dans ou de sortir du tambour par l'intermédiaire de l'intervalle existant entre le rebord et l'élément stationnaire, le moyen d'étanchéité comprenant un joint annulaire fixé sur une des parties constituées par le rebord et l'élément stationnaire, une partie du joint étant en contact glissant avec une surface plane (9) qui est située dans un plan perpendiculaire audit axe sur l'autre partie constituée par le rebord et l'élément stationnaire (6) autour de toute sa circonférence et est poussée élastiquement contre la surface, caractérisé en ce que le joint d'étanchéité se compose d'un élément élastique annulaire (10) dont une partie extrême (12) est tronconique dans sa condition non soumise à contrainte, l'extrémité libre de cette partie extrême étant placée à une extrémité de l'élément élastique dans une direction radiale tandis qu'une seconde partie (11) de l'élément élastique (10) immédiatement adjacente à ladite partie extrême (12) est cylindrique ou tronconique, avec un angle de cône différent de celui de ladite partie extrême (12), et s'étend axialement à partir de la zone où elle rejoint ladite partie extrême (12) à distance de ladite extrémité libre, l'élément élastique (10) étant fixé par ladite partie extrême et ladite seconde partie coaxialement audit axe, et ladite partie extrême (12) de l'élément élastique étant appliquée à plat contre la surface plane (9).

2. Appareil tel que revendiqué dans la revendication 1, dans lequel le joint d'étanchéité (10) est fixé sur le rebord (2, 3).

3. Appareil tel que revendiqué dans la revendication 1 ou la revendication 2, dans lequel ladite partie extrême (12) du joint d'étanchéité (10), lorsque ce joint d'étanchéité se trouve dans sa condition non soumise à contrainte, est effilée en direction de son extrémité libre.

4. Appareil tel que revendiqué dans la revendication 1 ou la revendication 2, dans lequel ladite partie extrême (12) du joint d'étanchéité (10), lorsque ce joint se trouve dans sa condition non soumise à contrainte, est évasée en direction de son extrémité libre.

5. Appareil tel que revendiqué dans une quelconque des revendications 1 à 4, dans lequel ladite seconde partie (11) du joint d'étanchéité (10), lorsque ce joint se trouve dans sa condition non soumise à contrainte, est cylindrique.

6. Appareil tel que revendiqué dans une quelconque des revendications 1 à 5, dans lequel le joint d'étanchéité (10) est formé de néoprène.

7. Appareil tel que revendiqué dans une quelconque des revendications 1 à 6, dans lequel ladite surface annulaire plane est revêtue de, ou constitue la surface d'un élement (9) formé d'un matériau ayant un faible coefficient de frottement.

8. Appareil tel que revendiqué dans une quelconque des revendications 1 à 7, dans lequel le tambour a une forme cylindrique droite.

9. Appareil tel que revendiqué dans une quelconque des revendications 1 à 8, dans lequel ladite seconde partie extrême (11) du joint d'étanchéité (10) est fixée en un certain endroit de sa longueur axiale où est fixée une des parties constituées par le rebord (2, 3) et l'élément stationnaire (6 à 9).

10. Appareil tel que revendiqué dans une quelconque des revendications 1 à 9, qui est un filtre en cuvette.

**Patentansprüche**

1. Flüssigkeitsbehandlungsvorrichtung, umfassend eine hohlzylindrische Trommel, drehbar um ihre Achse angeordnet und mit einer Öffnung in mindestens einem Ende versehen, die von einer Felge (2, 3) umschlossen ist, ein stationäres Bauteil (6 bis 9) nahe der Felge, und Abdichtmittel zum Verhindern von Flüssigkeitsströmung in die oder aus der Trommel durch den Spalt zwischen der Felge und dem stationären Bauteil, wobei die Abdichtmittel eine Ringdichtung umfassen, die an einem der Elemente Felge bzw. stationäres Bauteil befestigt ist, wobei ein Abschnitt dieser Dichtung in Gleitkontakt mit einer ebenen Oberfläche (9) steht, die in einer Ebene senkrecht zu der genannten Achse auf dem anderen Element von Felge bzw. stationärem Bauteil (6) ringsum seinen gesamten Umfang liegt und federnd gegen die Oberfläche angedrückt ist, dadurch gekennzeichnet, daß die Dichtung aus einem ringförmigen nachgiebigen Teil (10), besteht, von dem ein axialer Endabschnitt (12) im unbelasteten Zustand kegelstumpfförmig ist und von welchem nachgiebigen Teil (10) ein zweiter Abschnitt (11) unmittelbar an den genannten Endabschnitt (12) anstoßend zylindrisch oder kegelstumpfförmig ist mit einem Konuswinkel, der abweicht von dem des genannten Endabschnitts (12) und sich axial von der Stelle, wo er an den genannten Endabschnitt anschließt, von dem genannten freien Ende weg erstreckt, wobei das nachgiebige Teil (10) mit seinem genannten Ende und mit dem zweiten Abschnitt koaxial zu der genannten Achse befestigt ist, und daß der genannte Endabschnitt (12) des nachgiebigen Teils (10) flach gegen die ebene Oberfläche (9) gepreßt ist.

2. Vorrichtung nach Anspruch 1, worin die Dichtung (10) an der Felge (2, 3) befestigt ist.

3. Vorrichtung nach Anspruch 1 oder 2, worin der genannte Endabschnitt (12) der Dichtung (10), wenn die Dichtung in unbelastetem Zustand ist, sich in Richtung auf sein freies Ende verjüngt.

4. Vorrichtung nach Anspruch 1 oder 2, worin der genannte Endabschnitt (12) der Dichtung (10), wenn die Dichtung in unbelastetem Zustand ist, sich in Richtung seines freien Endes erweitert.

5. Vorrichtung nach einem der Ansprüche 1 bis 4, worin der genannte zweite Abschnitt (11) der Dichtung (10), wenn die Dichtung in unbelastetem Zustand ist, zylindrisch ist.

6. Vorrichtung nach einem der Ansprüche 1 bis 5, worin die Dichtung (10) aus Neopren gefertigt ist.

7. Vorrichtung nach einem der Ansprüche 1 bis 6, worin die besagte flache ringförmige Oberfläche einem Bauteil (9) aus einem Material mit niedrigem Reibungskoeffizienten gegenübersteht oder dessen Oberfläche ist.

8. Vorrichtung nach einem der Ansprüche 1 bis 7, worin die Trommel kreiszylindrisch ist.

9. Vorrichtung nach einem der Ansprüche 1 bis 8, worin der besagte zweite Abschnitt (11) der Dichtung (10) irgendwo längs seiner axialen Länge an der Felge (2, 3) bzw. dem stationären Bauteil (6 bis 9), jenachdem, befestigt ist.

10. Vorrichtung nach einem der Ansprüche 1 bis 9, welche ein Topfsieb ist.

FIG. 1.

FIG. 2.

FIG. 3.

FIG. 4.

2